# EUROPEAN PATENT SPECIFICATION

(11) **EP 0 692 005 B1**
(45) Date of publication and mention of the grant of the patent: **18.02.1998**
(21) Application number: 94912496.0
(22) Date of filing: 22.03.1994
(51) Int. Cl.: C09D 127/06, C08J 9/32

(54) **PROTECTIVE COATING COMPOSITION FOR MOTOR VEHICLE UNDERBODIES AND GRAVEL GUARDS**
SCHUTZBESCHICHTUNGSZUSAMMENSETZUNG FÜR FAHRZEUG-UNTERBODEN UND STEINSCHLAGSCHUTZ
COMPOSITION DE REVETEMENT DE PROTECTION POUR BAS DE CAISSE ET PIECES PARE-GRAVILLONS DE VEHICULES AUTOMOBILES

(30) Priority: 31.03.1993 IT MI930636
(43) Date of publication of application: 17.01.1996
(73) Proprietor: PPG INDUSTRIES ITALIA S.r.l., 12010 Spinetta (IT)
(72) Inventor: FERRARI, Giancarlo, I-15028 Quattordio (IT); PANFILI, Mario, I-15100 Alessandria (IT); TOMALINO, Massimo, I-14100 Asti (IT)
(74) Representative: Perani, Aurelio
(86) International application number: EP9400890
(87) International publication number: WO9422967

(56) References cited:
- EP-A- 0 304 550

## Description

The present invention relates in its more general aspect to the protection of any surfaces against the bruising, abrasive and/or corrosive action of external agents.

More particularly the invention is concerned with a polyvinyl coating composition for protecting metal surfaces against scratching, chipping and like abrasion due to the impact of hard, bruising bodies such as dust, gravel, stones and the like, as well as against corrosion.

Even more particularly, the present invention relates to a protective polyvinyl coating composition for motor-vehicle underbodies and gravel guards.

It is known that, in order to protect underbodies and gravel guards of motor vehicles from dust and stones, a layer of elastic-rubbery material is applied thereto, generally by spraying, in a suitably thick layer generally of between 400 and 1000 µ. This is both to provide anticorrosion protection and, particularly, to safeguard the cationic base layer against scratches, chipping and the like.

Because of their considerable thickness, such protective layers are also able to seal any joints between the various metal parts.

The material most widely used until now for this purpose includes vinyl resin as its main component, particularly a polyvinyl chloride (PVC) or a polyvinyl chloride/polyvinyl acetate (PVC/PVAc) resin and, to a variable extent, mineral fillers, adhesion promoters, rheology controllers, plasticisers and the like.

Generally this material is dispersed in a plasticising mixture and consists of a paste having a fairly high viscosity (50,000-100,000 cps).

A standard protective coating composition for underbodies and gravel guards of the type indicated generally comprises from 14-18% of polyvinyl resin, from 36-40% of a plasticiser or mixture of plasticisers, from 1-2.5% of adhesion promoters, about 40% of mineral fillers, solvents and additives in general.

After application, the composition is gelled at a temperature within the range 140-160°C, giving rise to a continuous PVC film incorporating the plasticiser and other components.

Alongside the recognised effectiveness of their protective action, PVC-resin based coatings for underbodies and gravel guards have an equally well known disadvantage constituted by their weight. Indeed for, for example, a saloon car of average to high class such as a Lancia-Fiat Thema, the weight of the protective coating for the underbody is about 8.5 -9.5 kg/vehicle.

European patent application No. 0643750, published on 01.06.1993 and thus relevant to the present application under Art. 54(3)EPC, discloses a coating composition for car underbodies comprising a vinyl-chloride-polymer-based plastisol and expandable thermoplastic microspheres.

Now it also well known that, in the light of cost/performance ratios, the current tendency in the motor-vehicle industry is to reduce the weight of the vehicle wherever possible and as much as possible. Consequently, with regard to protective coatings for the underbody and gravel guards, the technical problem arises of how to reduce their weight considerably without reducing their protective efficiency, both against abrasion and corrosion, and also without reducing their ease of application since it must be possible to effect this with the apparatus and equipment conventionally used for this purpose until now.

This problem is solved according to the invention by a protective coating composition for motor-vehicle underbodies and gravel guards in general, characterised in that it comprises, in percentages by weight of the weight of the composition, from 20-40% of PVC resin, from 1-3% of a hot-swelling agent constituted by an acrylonitrile/acrylic ester/olefin copolymer, encapsulating an appropriate quantity of a C₄-C₆ alkane, and a phenolic resin.

In accordance with a further characteristic of the invention, the hot-swelling agent is used in the form of microspheres of the copolymer incorporating the C₄-C₆. alkane, the microsphere having a diameter of 8-15 µm.

Preferably the C₄-C₆ alkane is isobutane.

To advantage the preferred swelling agents used are those sold under the name EXPANCEL by Expancel Nobel Industries Sweden and under the name MICROPEARL by Matsumoto Yushi Seiyaku.

On the basis of these fundamental characteristics, a formulation for a protective coating composition for vehicle underbodies and gravel guards according to the invention comprises, in general and again in percentages by weight of the total weight of the composition,

| | |
|---|---|
| PVC (PVC/PVAc) Resin | 20-40% |
| Plasticisers | 30-50% |
| Adhesion promoters | 0.5 - 1.5% |
| Coated and natural fillers | 20-30% |
| Additives and Pigments | 1-3% |
| Swelling Agent | 1-3% |
| Solvents | 1-3% |
| Phenolic resin (resorcin) | 0.2-1.2% |

A useful plasticiser for the purposes of the present invention is selected from the group comprising phthalates, adipates, benzoates, trimellitates, sulphonates and their mixtures.

The mineral fillers, which may be coated and natural fillers, are those normally used in known formulations for polyvinyl coatings for underbodies and comprise calcium carbonates and silicates, talc, mica, kaolin, titanium dioxide and the like.

The adhesion promoters most widely used are polyamino-amide resins, epoxy resins, melamine resins, polyurethane resins and ureic resins. Naturally other resins may be used in accordance with the teachings of the prior art relating to polyvinyl coatings for underbodies.

The preferred solvents are aliphatic hydrocarbons.

All the formulations of the composition of the invention which fall within the values specified above can be applied very well by the spray technique and by the same apparatus as that currently used for prior art PVC coating compositions.

More particularly, the material of the invention may be sprayed by means of airless pumps with a 45/1 compression ratio at an average pressure of about 3 atmospheres.

The thickness of the composition layer advisable to give satisfactory protection is about 0.20-0.33mm. To obtain uniform application it is advisable to supply the composition of the invention at a temperature of between 20 and 25°C.

During this application, a total absence of dripping is consistently observed.

The optimum hot conversion is achieved with a baking cycle in which the composition is heated to a temperature of between 140 and 150°C for about 30 minutes.

Whenever EXPANCEL is used as the swelling agent, the temperature range for the baking cycle is preferably 140-150°C. When the swelling agent is MICROPEARL, the temperature range is preferably 160-180°C.

During this phase no problems occur due to the hot composition dripping and the composition of the invention is found consistantly to adhere well to the cataphoretic layer.

At the end of the baking phase, the expanded protective coating layer obtained has a thickness falling within the conventional ranges required by motor-vehicle manufacturers, while the resistance to abrasion is wholly comparable with values given by conventional, prior-art PVC resin coatings.

Furthermore, an improved sound-proofing effect is found and, surprisingly in that this was wholly unexpected, an extremely good ability to take an overcoat of paint. This property is particularly important as regards the use of the composition of the invention as a protective coating for gravel guards. In fact, coatings for gravel guards made with conventional materials, when painted, give aesthetically unsatisfactory results and for this reason it is generally preferred to use alternative protective systems for gravel guards, such as, for example, plastics coatings, which however add considerably to the production costs. In order to give the protective coatings optimum resistance to corrosion, the composition of the invention includes from 0.2 - 1.2% by weight of the total weight of a phenolic resin, particularly and preferably resorcin.

With such a resin it is preferred to use an adipate as the pasticiser for the composition, particularly and preferably dioctyl adipate.

The composition, with this additive, has enabled protective coating layers to be obtained which, after remaining for 500 hours in a damp, saline environment, do not show any change due to corrosion.

A particularly pleasing and unexpected advantage achieved with the use of phenolic resin and an adipate plasticiser is the possibility of reducing the quantity of adhesion promoter (polyamide resin) to about 1-2% by weight of the composition with consequent and not negligible economic advantages.

The main advantage achieved by the protective coatings obtained with the composition of the invention, however, is their weight which is a good 40-50% less than the weight of prior-art coatings for the same thickness.

For example, the protective coating for the underbody of a Lancia Thema, obtained with the composition of the invention, weighs 4.5kg.

Further characteristics and advantages of the invention will become clearer from several examples of protective coating compositions for underbodies and gravel guards and related results of tests carried out on them, given below by way of non-limitative example, and in which all the parts and percentages are given by weight of the total weight of the composition if not otherwise indicated.

In the photographic reproductions:

Figures 1, 2, 3 show electronic microscopic enlargements of cross-sections of respective coatings of underbodies and gravel guards according to the invention.

Figure 4 shows a cross-section of a prior-art coating of an underbody on the same scale.

### EXAMPLE 1

Into a horizontal mixer provided with a stainless steel mixer rotated at 17-25 revolutions per minute, there were measured successively the following components:

| | |
|---|---|
| Dioctyl adipate (plasticiser) | 33% |
| Adhesion promoter (polyamide resin) | 1.2% |
| Mineral fillers (SiO₂ + CaCO₃) | 7.5% |
| Vinyl resin (PVC) | 30.5% |
| Mineral fillers (CaCO₃, pigments, zinc oxide, calcium hydroxide, calcium oxide) | 22% |

After prolonged mixing for 10 minutes to achieve a homogeneous mixture, the following components were then measured into the mixture:

| | |
|---|---|
| Mineral filler (CaCO₃) | 2.5% |
| Swelling agent (Microspheric) (EXPANCEL) | 1.14% |
| Phenolic resin (resorcin) | 0.5% |
| Solvents | 2.1% |

The composition thus obtained was sprayed onto the underbody of a motor vehicle (Lancia Thema) after cataphoretic painting, with the use of an average pressure of about three atmospheres for the application and with the formation of a layer 0.3mm thick.

The application was carried out at an ambient temperature of 22°C.

After baking for 30 minutes at a temperature of 150°C, the protective coating had hardened and expanded to a final thickness of 0.40mm. The baking was carried out during the passage of the body through primer and enamel baking ovens.

The weight of the coating layer obtained was 4.5kg.

### EXAMPLE 2

The procedure of Example 1 was repeated with the use of the same components to obtain a composition including 2% of the hot expanding agent (EXPANCEL) and 40% of the plasticiser (dioctyl phthalate).

Again in this case the composition could easily be applied by the usual apparatus and equipment in the same layout.

The resulting coating, after baking, hardening and gelling, weighed 4.5kg/vehicle.

The composition was applied in the same manner to the gravel guards of a motor vehicle (Lancia Thema) as well as to the underbody, and a coating layer was obtained which, after baking, had a thickness of 0.40mm and a weight of 4.8kg/vehicle.

### EXAMPLE 3

The procedure of Example 1 was repeated with the same components except that 3% of the swelling agent EXPANCEL and 50% of plasticiser (dioctyl phthalate) were used.

The same procedure again being used, the resulting composition was sprayed onto the painted underbody of a Lancia Thema and, after baking in an oven, the weight of the protective coating layer was 4.7kg.

### EXAMPLE 4

The procedure of Example 1 was again followed with the use of the same components except for the hot-swelling agent which, in this case, was 2% MICROPEARL F-100.

The composition obtained was sprayed on to the underbody and the gravel guards of the motor vehicle (Lancia Thema) after cataphoretic painting, with the use of an average pressure of about 3 atmospheres for the application and with the formation of a layer 0.3mm thick.

The application was carried out at a temperature of 22°C. After baking for 30 minutes at a temperature of 165°C, the protective coating had hardened and expanded to give a final thickness of 0.40mm.

The baking was effected during the passage of the body through primer and enamel baking ovens. The weight of the coating layer was 4.8kg/vehicle.

### CONTROL EXAMPLE

With the use of the same components (except for the hot-swelling agent and the phenolic resin), a standard protective coating composition was obtained with the following formulation:

| | |
|---|---|
| Total polyvinyl resin (PVC/PVAc) | 14.4% |
| Plasticiser | 39% |
| Adhesion promoters | 1.25% |
| Mineral fillers (total) | 42.4% |
| Solvents | 2.50% |
| Other additives | 0.45% |

The polyvinyl resin composition thus obtained was sprayed in a conventional manner onto the underbody of a Thema and, after baking to harden and gel it, the protective layer had a weight of 9.5kg and a thickness of 0.45mm.

The standard tests for strength, chemical and physical properties normally carried out by motor-vehicle manufacturers were carried out on the compositions-coatings given in the examples above. The results of these tests are given in the table below.

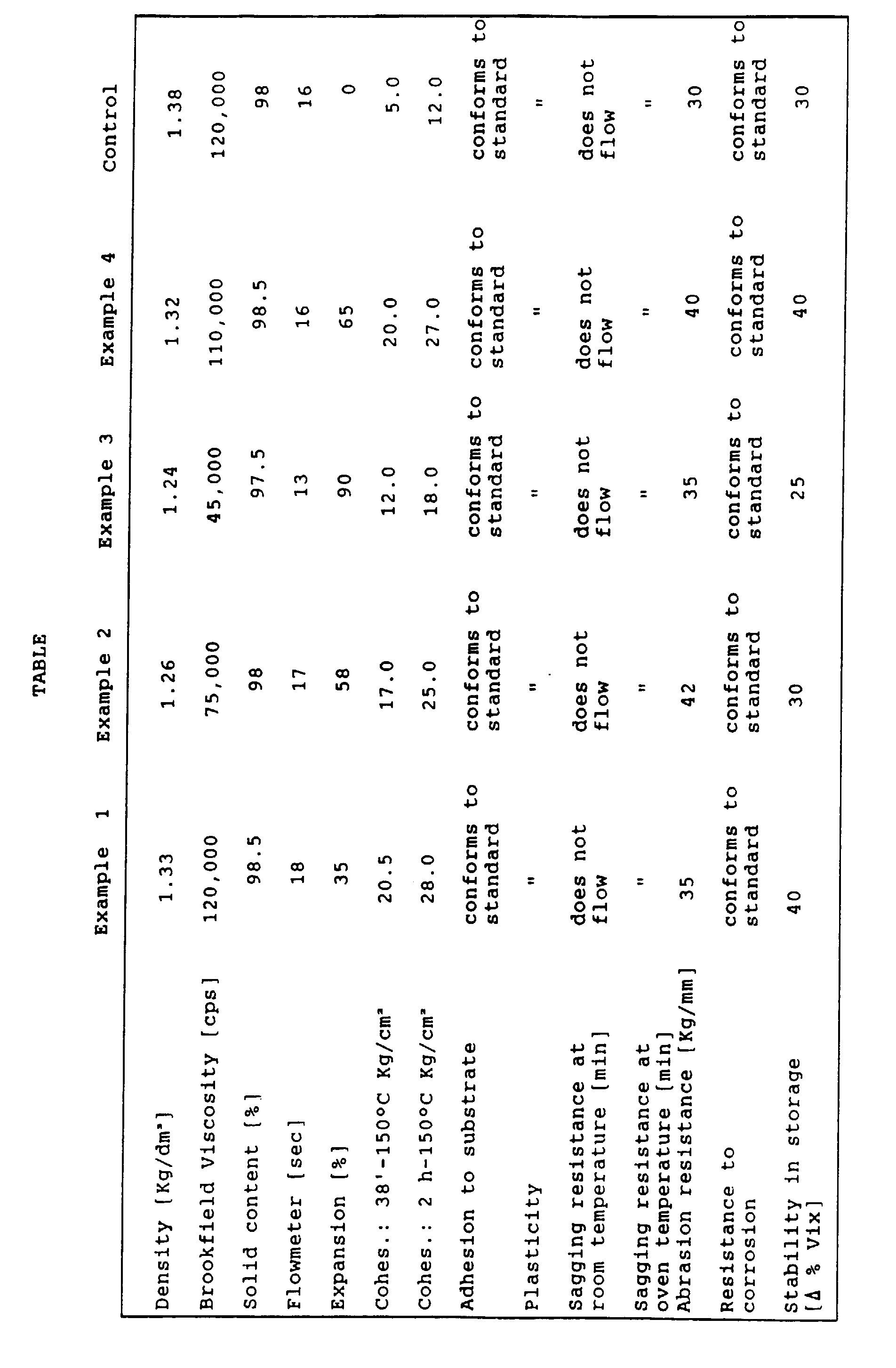

It is thought that the great advantage - reduction in the weight of the coating of the underbody and gravel guards by 40-50% for the same thickness and performance - is due particularly to the expanded structure of the coating. Indeed, the expanded structure of the coating includes a plurality of spheroidal cells which are very regular in diameter and very uniformly distributed throughout the entire thickness of the coating itself. Each cell is constituted by a casing of acrylonitrile/acrylic ester/olefin copolymer encapsulating a C₄-C₆ alkane. Thus it is not a porous structure such as that generated by substances which, when treated at high temperatures, liberate gas and in which the pores have very different dimensions from each other and are very irregularly distributed, such pores constituting discontinuities in the structure in which moisture can collect.

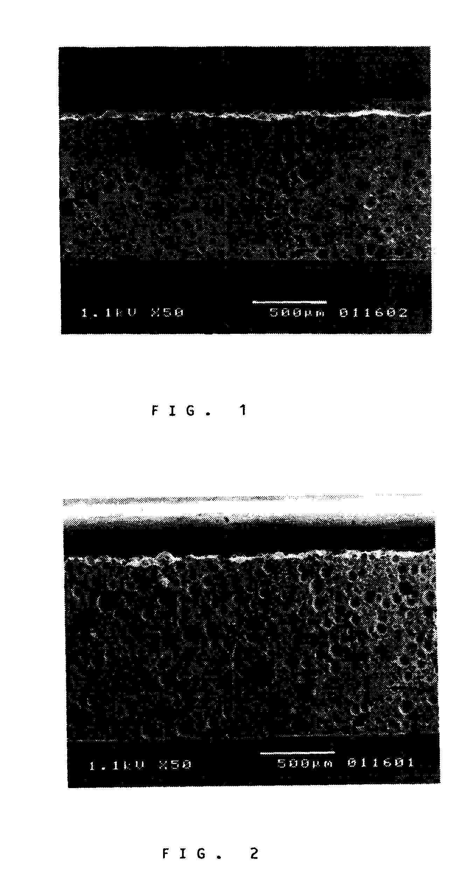

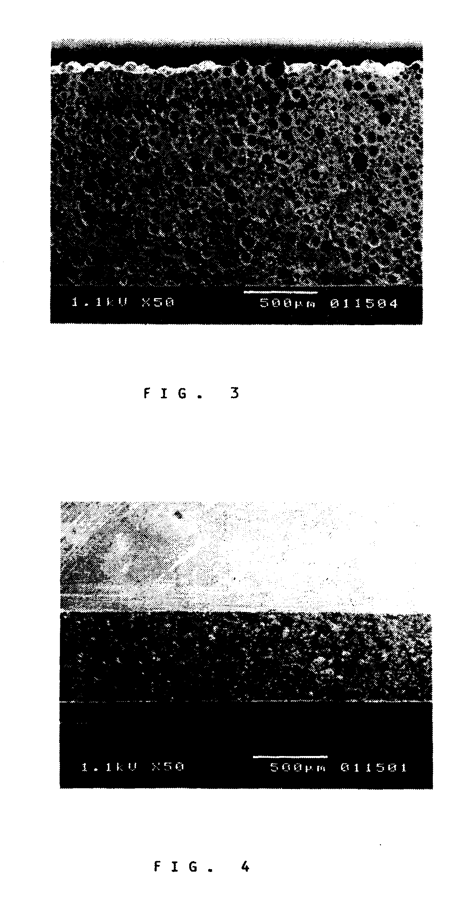

The appended drawings show several cross-sections of coatings obtained with the composition of the invention and with a standard composition (of the prior art) respectively. In particular Figures 1, 2 and 3 show cross-sections through coatings obtained from Examples 1, 2, 3 while the cross-section of the standard coating (Example 4) is given in Figure 4.

In addition to the uniformity of distribution of the microspheroidal cells, it should be noted that the coatings of the invention correspond to an increase in volume of 80-90% over the thickness of the standard coating.

## Claims

1. A protective coating composition for motor-vehicle underbodies and gravel guards characterized in that it comprises, in percentages by weight of the composition, from 20-40% of PVC resin (PVC/PVAc), from 1-3% by weight of a hot-swelling agent, constituted by an acrylonitrile/acrylic ester/olefin copolymer encapsulating an appropriate quantity of a C₄-C₆ alkane, and a phenolic resin.

2. A composition according to claim 1, wherein the phenolic resin is present in an amount of 0.2 to 1.2% by weight of the composition.

3. A composition according to any of claims 1 and 2, wherein the hot swelling agent is used in the form of microspheres of the copolymer incorporating a C₄-C₆ alkane, the microspheres having a diameter of 8-15 µm.

4. A composition according to claim 3, wherein the C₄-C₆ alkane is isobutane.

5. A composition according to any of claims 1 to 4, wherein said phenolic resin is resorcin.

6. A composition according to claim 5, which further includes an adipate as a plasticizer in quantities of between 30 and 50% by weight of the weight of the composition.

7. A composition according to claim 6, characterized in that the adipate is dioctyl adipate.

8. A protective coating composition for motor-vehicle underbodies and gravel guards, characterised in that it comprises, in percentages by weight of the total weight of the composition:
| | |
|---|---|
| PVC (PVAc) Resin | 20-40% |
| Plasticiser | 30-50% |
| Adhesion promoter | 0.5 - 1.5% |
| Natural coated fillers | 20-30% |
| Additives and Pigments | 1-3% |
| Swelling Agent | 1-3% |
| Phenolic resin (resorcin) | 0.2-1.2% |
| Solvents | 1-3% |

9. A composition according to Claim 8, characterised in that the plasticiser is selected from the group comprising phthalates, adipates, benzoates, trimellitates, sulphonates and their mixtures.

10. A composition according to Claim 9, characterised in that the plasticiser is dioctyl adipate.

11. A composition according to Claim 8, characterised in that the adhesion promotores are selected from the group comprising polyamino-amide resins, epoxy resins, melamine resins, polyurethane resins and ureic resins and their mixtures.

12. A composition according to Claim 8, characterised in that the mineral fillers are selected from the group comprising calcium carbonates and silicates, talc, mica, kaolin, titanium dioxide and their mixtures.

## Patentansprüche

1. Beschichtungs-Zusammensetzung für den Unterbodenschutz und den Schutz gegen Steinschlag bei Motorfahrzeugen, dadurch gekennzeichnet, daß sie umfaßt in Gew.-%, bezogen auf das Gewicht der Zusammensetzung,
20 bis 40 % PVC-Harz (PVC/PVAc),
1 bis 3 % eines Heißquellmittels, bestehend aus einem Acrylnitril/Acrylester/Olefin-Copolymer, in dem eine geeignete Menge eines C₄-C₆-Alkans eingekapselt ist, und
ein Phenolharz.

2. Zusammensetzung nach Anspruch 1, worin das Phenolharz in einer Menge von 0,2 bis 1,2 Gew.-%, bezogen auf das Gewicht der Zusammensetzung, vorliegt.

3. Zusammensetzung nach einem der Ansprüche 1 und 2, worin das Heißquellmittel in Form von Mikrokugeln aus dem Copolymer, in denen ein C₄-C₆-Alkan eingeschlossen ist, verwendet wird, wobei die Mikrokugeln einen Durchmesser von 8 bis 15 µm haben.

4. Zusammensetzung nach Anspruch 3, worin das C₄-C₆-Alkan Isobutan ist.

5. Zusammensetzung nach einem der Ansprüche 1 bis 4, worin das Phenolharz Resorcin ist.

6. Zusammensetzung nach Anspruch 5, die außerdem ein Adipat als Weichmacher in Mengen zwischen 30 und 50 Gew.-%, bezogen auf das Gewicht der Zusammensetzung, enthält.

7. Zusammensetzung nach Anspruch 6, dadurch gekennzeichnet, daß es sich bei dem Adipat um Dioctyladipat handelt.

8. Beschichtungs-Zusammensetzung für den Unterbodenschutz und den Schutz gegen Steinschlag bei Motorfahrzeugen, dadurch gekennzeichnet, daß sie in Gew.-%, bezogen auf das Gesamtgewicht der Zusammensetzung, umfaßt:
| | |
|---|---|
| PVC (PVAc)-Harz | 20 bis 40 % |
| Weichmacher | 30 bis 50 % |
| Adhäsions-Promotor | 0,5 bis 1,5 % |
| natürliche beschichtete Füllstoffe | 20 bis 30 % |
| Additive und Pigmente | 1 bis 3 % |
| Quellmittel | 1 bis 3 % |
| Phenolharz (Resorcin) | 0,2 bis 1,2 % |
| Lösungsmittel | 1 bis 3 %. |

9. Zusammensetzung nach Anspruch 8, dadurch gekennzeichnet, daß der Weichmacher ausgewählt wird aus der Gruppe, die umfaßt Phthalate, Adipate, Benzoate, Trimellithate, Sulfonate und ihre Mischungen.

10. Zusammensetzung nach Anspruch 9, dadurch gekennzeichnet, daß es sich bei dem Weichmacher um Dioctyladipat handelt.

11. Zusammensetzung nach Anspruch 8, dadurch gekennzeichnet, daß die Adhäsions-Promotoren ausgewählt werden aus der Gruppe, die umfaßt Polyaminoamid-Harze, Epoxyharze, Melaminharze, Polyurethanharze und Harnstoffharze und Mischungen davon.

12. Zusammensetzung nach Anspruch 8, dadurch gekennzeichnet, daß die mineralischen Füllstoffe ausgewählt werden aus der Gruppe, die besteht aus Calciumcarbonaten und -silicaten, Talk, Glimmer, Kaolin, Titandioxid und Mischungen davon.

## Revendications

1. Composition de revêtement de protection pour bas de caisse et pièces pare-gravillons de véhicules automobiles caractérisée en ce qu'elle comprend, en pourcentages en poids de la composition, de 20 à 40% de résine PVC (PVC/PVAc), de 1 à 3% en poids d'un agent de gonflement à chaud, constitué d'un copolymère acrylonitrile/ester acrylique/oléfine enrobant une quantité appropriée d'un alcane en C₄-C₆, et une résine phénolique.

2. Composition selon la revendication 1, dans laquelle la résine phénolique est présente en une quantité de 0,2 à 1,2% en poids de la composition.

3. Composition selon l'une ou l'autre des revendications 1 et 2, dans laquelle l'agent de gonflement à chaud est utilisé sous forme de microsphères du copolymère incorporant un alcane en C₄-C₆, les microsphères ayant un diamètre de 8 à 15 µm.

4. Composition selon la revendication 3, dans laquelle l'alcane en C₄-C₆ est l'isobutane.

5. Composition selon l'une quelconque des revendications 1 à 4, dans laquelle ladite résine phénolique est la résorcine.

6. Composition selon la revendication 5, qui comprend en outre un adipate en tant que plastifiant en des quantités comprises entre 30 et 50% en poids du poids de la composition.

7. Composition selon la revendication 6, caractérisée en ce que l'adipate est l'adipate de dioctyle.

8. Composition de revêtement de protection pour bas de caisse et pièces pare-gravillons de véhicules automobiles, caractérisée en ce qu'elle comprend, en pourcentages en poids du poids total de la composition :
| | |
|---|---|
| Résine PVC (PVAc) | 20 à 40% |
| Plastifiant | 30 à 50% |
| Promoteur d'adhérence | 0,5 à 1,5% |
| Charges naturelles et enrobées | 20 à 30% |
| Additifs et pigments | 1 à 3% |
| Agent de gonflement | 1 à 3% |
| Résine phénolique (résorcine) | 0,2 à 1,2% |
| Solvants | 1 à 3% |

9. Composition selon la revendication 8, caractérisée en ce que le plastifiant est choisi dans le groupe composé des phtalates, des adipates, des benzoates, des trimellitates, des sulfonates et de leurs mélanges.

10. Composition selon la revendication 9, caractérisée en ce que le plastifiant est l'adipate de dioctyle.

11. Composition selon la revendication 8, caractérisée en ce que les promoteurs d'adhérence sont choisis dans le groupe constitué des résines de polyamino-amide, des résines époxydes, des résines de mélamine, des résines de polyuréthane et des résines uréiques et de leurs mélanges.

12. Composition selon la revendication 8, caractérisée en ce que les charges minérales sont choisies dans le groupe constitué des carbonates et silicates de calcium, du talc, du mica, du kaolin, du dioxyde de titane et de leurs mélanges.
